# EUROPÄISCHE PATENTSCHRIFT

(11) **EP 3 245 037 B1**
(45) Veröffentlichungstag und Bekanntmachung des Hinweises auf die Patenterteilung: **04.03.2020**
(21) Anmeldenummer: 16700655.0
(22) Anmeldetag: 15.01.2016
(51) Int. Cl.: B60N 2/80, B60N 2/70, B60N 2/58, B29C 44/12, B29C 44/18, B29C 44/08, B29L 31/30, B29K 75/00

(54) **KOPFSTÜTZE**
HEAD REST
APPUIE-TÊTE

(30) Priorität: 15.01.2015 DE 102015200553
(43) Veröffentlichungstag der Anmeldung: 22.11.2017
(73) Patentinhaber: Adient Luxembourg Holding S.à r.l., 1855 Luxembourg (LU)
(72) Erfinder: DILLINGER, Thomas, 40880 Ratingen (DE); MANDUZIO, Felix, 67400 Illkirch-Graffenstaden (FR)
(74) Vertreter: Schwöbel, Thilo K.
(86) Internationale Anmeldenummer: PCT/EP2016/050834
(87) Internationale Veröffentlichungsnummer: WO 2016/113419

(56) Entgegenhaltungen:
- EP-A2- 0 210 587
- EP-A2- 1 166 991
- EP-A2- 1 842 648
- DE-A1-102009 046 660
- FR-A1- 3 003 211
- JP-A- H0 966 762

## Beschreibung

### Stand der Technik

Die vorliegende Erfindung betrifft eine Kopfstütze für ein Fahrzeug. Kopfstützen vom Stand der Technik sind z.B. von der DE 10 2009 046 660 A1 und von der EP 1 842 648 A2 bekannt.

Im Stand der Technik ist keine Kopfstütze bekannt, welche unter Anwendung einer Pour-in-Place Technologie und unter gleichzeitiger Befestigung an einer Unterstützungsstange zur Befestigung an einer Rückenlehne eines Fahrzeugsitzes innerhalb eines Verfahrensschritts hergestellt werden kann, wobei gleichzeitig die Herstellungskosten gesenkt werden und Sicherheitsstandards eingehalten werden.

### Offenbarung der Erfindung

Es ist eine Aufgabe der vorliegenden Erfindung, eine Kopfstütze für ein Fahrzeug zur Verfügung zu stellen, welche unter Anwendung einer Pour-in-Place Technologie und unter gleichzeitiger Befestigung an einer Unterstützungsstange zur Befestigung an einer Rückenlehne eines Fahrzeugsitzes innerhalb eines Verfahrensschritts hergestellt werden kann, wobei gleichzeitig die Herstellungskosten gesenkt werden und Sicherheitsstandards eingehalten werden.

Die Aufgabe der vorliegenden Erfindung wird durch eine Kopfstütze gemäß Anspruch 1 und durch ein Verfahren gemäß Anspruch 7 gelöst.

Gegenüber dem Stand der Technik hat die erfindungsgemäße Kopfstütze dabei den Vorteil, dass Prozessschritte bei der Herstellung eingespart werden können, sodass die Herstellungskosten gesenkt werden können, wobei auf eine Einhaltung von Sicherheitsstandards nicht verzichtet wird.

In einer weiteren Ausführungsform ist es vorgesehen, dass ein Teil der Haken ferner dazu ausgebildet ist, mit zweiten Einstanzungen in der U-förmig gebogenen Stützstange eine zweite steckartige Verbindung einzugehen.

Dies hat den Vorteil, dass durch einfaches Zusammendrücken von Vorder- und Rückteil die erfindungsgemäße Kopfstütze 'zusammengesteckt' werden kann, wobei die gebildeten Steckverbindungen einen festen Zusammenhalt der zweiteiligen Kopfstütz gewährleisten.

Dies hat den Vorteil, dass während der Herstellung lediglich das Vorderteil zugeschnitten werden muss. Ein zugeschnittenes Bezugsteil braucht lediglich mittels der Haken an der Frontseite des Vorderteils befestigt werden, ohne dass Nähte erforderlich sind.

In einer weiteren Ausführungsform ist es vorgesehen, dass das Rückteil mit den integrierten Seitenteilen ein Spritzgussteil ist, wobei das Spritzgussteil einen Kunststoff umfasst.

Dies hat den Vorteil, dass die Rückseite und die Seiten der Kopfstütze mittels Spritzgussverfahren als ein zusammenhängendes oder einteiliges Strukturteil und unter Verwendung von beliebig plastisch verformbarer Kunststoffe herstellbar sind.

Dadurch wird in vorteilhafter Weise erreicht, dass sich die Haken des Rückteils sofort und irreversibel durch bloßes Zusammendrücken in den Einstanzungen des Vorderteils und in den Einstanzungen der Unterstützungsstange fest verankern.

In einer weiteren Ausführungsform ist in den geschlossenen Raum ein Schaumstoff einfüllbar, wobei der Schaumstoff ein Hartschaum und/oder ein Weichschaum ist.

In vorteilhafter Weise kann durch ein Einbringen von Schaumstoffen, wie z.B. Polyurethan, der Innenraum der Kopfstütze ausgefüllt werden und der Kopfstütze dadurch Formfestigkeit und Stabilität verleihen, was für die Einhaltung der Sicherheitsstandards wesentlich ist.

In einer weiteren Ausführungsform ist die U-förmig gebogene Stützstange derart in dem geschlossenen Raum zwischen dem Vorderteil und dem Rückteil mit den integrierten Seitenteilen angeordnet ist, dass die kürzeste Stangenstrecke des U-förmig gebogene Stützstange weitgehend parallel zur Oberkante des Rückteils mit den integrierten Seitenteilen und zur Oberkante des Vorderteils verläuft.

Dadurch können in vorteilhafter Weise die Prozesse der Zusammenmontage der Kopfstütze und der Prozess des Anbringens der Kopfstütze auf eine Stützstange zur Montage auf die Rückenlehne eines Fahrzeugsitzes zu einem einzigen Prozess vereint werden.

In einer weiteren Ausführungsform betrifft die Erfindung ein Verfahren zur Herstellung einer Kopfstütze, wobei im Rahmen eines Pour-in-Place Verfahrens in einem Verfahrensschritt ein Vorderteil, ein Rückteil mit integrierten Seitenteilen und eine U-förmig gebogene Stützstange mittels Haken, welche an nach innen geneigten Rändern des Rückteils mit den integrierten Seitenteilen positioniert sind, zusammenmontiert werden, wobei das Vorderteil und das Rückteil mit den integrierten Seitenteilen formschlüssig zusammengefügt werden, wobei ein geschlossener Raum entsteht, in welchen die U-förmig gebogene Stützstange positioniert wird und an der Oberkante des Rückteils mittels eines Teils der Haken befestigt wird, wobei in den geschlossenen Raum durch ein Einspritzloch ein Schaumstoff eingespritzt wird, wobei das Rückteil ein Spritzgussteil ist, welches einen Kunststoff umfasst, wobei für die Herstellung des Spritzgussteils und für das Einspritzen des Schaumstoffs ein identischer Trichter verwendet wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung.

### Kurze Beschreibung der Figuren

- Figur 1: zeigt das Rückteil mit integrierten Seitenteilen.
- Figur 2: zeigt das Vorderteil mit Sicht auf dessen äußere Frontseite.
- Figur 3: eine U-förmig gebogene Stützstange.
- Figur 4: zeigt die erfindungsgemäße Kopfstütze nach einer Zusammenmontage des Vorderteils und des Rückteils.
- Figur 5: zeigt die Kopfstütze mit Blick auf das Rückteil im zusammenmontierten Zustand.
- Figur 6: zeigt eine originäre Spritzgussform des Rückteils.
- Figur 7: zeigt die Kopfstütze mit Aufsicht auf die Frontseite des Vorderteils im montierten Zustand.

### Ausführungsformen der Erfindung

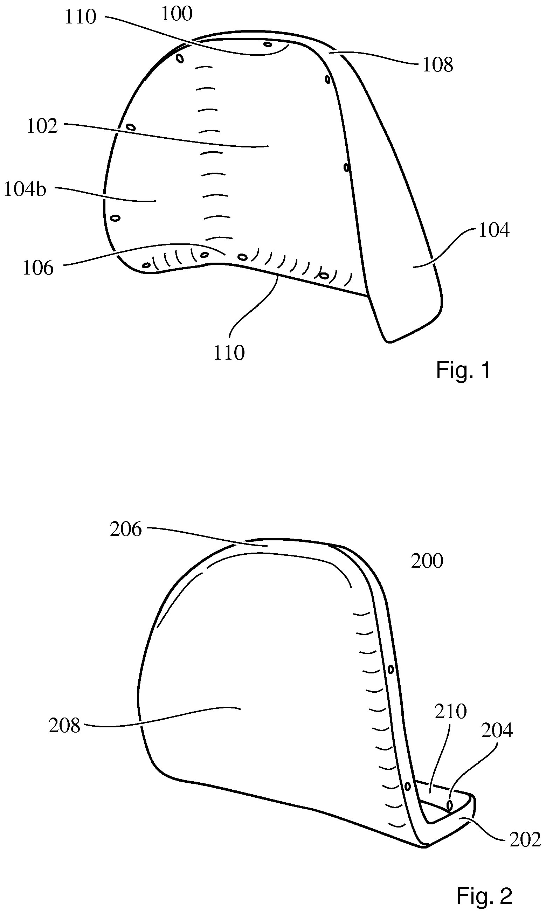

In **Figur 1** ist das Rückteil 100 mit integrierten Seitenteilen 104a und 104b der erfindungsgemäßen Kopfstütze 400 mit Einblick in die von der Rückseite 102 und den integrierten Seiten 104a und 104b aufgespannten Innenraum. Das Rückteil 100 ist während des Produktionsprozesses durch zwei distale, in die gleiche Richtung weisende Verformungen so geformt worden, dass ein einziges Strukturteil die Rückseite 102 und die beiden Seiten 104a und 104b einer Kopfstütze 400 bilden. Als Herstellungsmaterial für das erfindungsgemäße Rückteil 100 bietet sich ein plastisch verformbarer Kunststoff an. Das Rückteil 100 weist an seiner Rückseite 102 und an seinen beiden Seiten 104a und 104b nach innen in den Innenraum gewölbte Ränder 110 auf, auf welchen sich dem Innenraum zugewandte Haken 106 befinden. In einer Ausführungsform weisen die Haken 106 jeweils eine sich verjüngende Spitze auf.

**Figur 2** zeigt das Vorderteil 200 der erfindungsgemäßen Kopfstütze 400 mit Sicht auf dessen äußere Frontseite 208.Die äußere Frontseite 208 des Vorderteils 200 weist eine konkave Innenwölbung auf, sodass die seitlichen Ränder der Frontseite 208 nach frontal und die Oberkante 206 nach hinten gerichtet sind. In dieser Ausführungsform ist das Vorderteil 200 derart geformt, dass auch der Boden 202 der Kopfstütze 400 von dem Vorderteil 200 gebildet wird. Die Ränder 210 des Vorderteils 200 weisen erste Einstanzungen 204 auf, welche dazu ausgebildet sind, die Haken 106 des Rückteils 100 aufzunehmen.

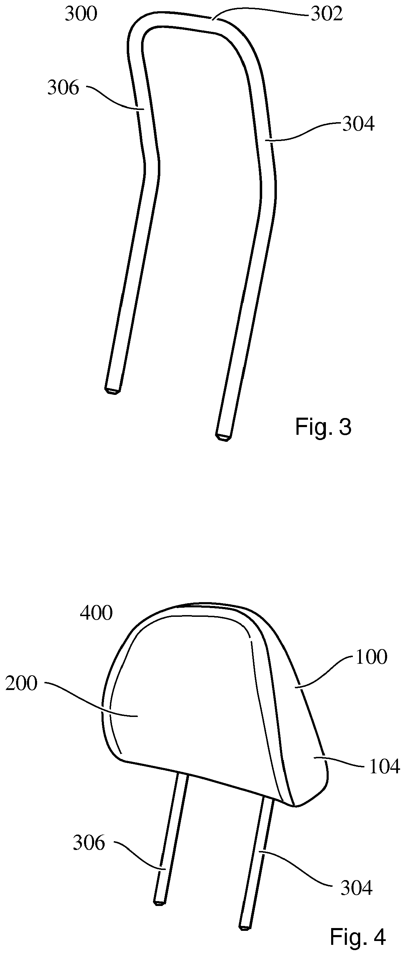

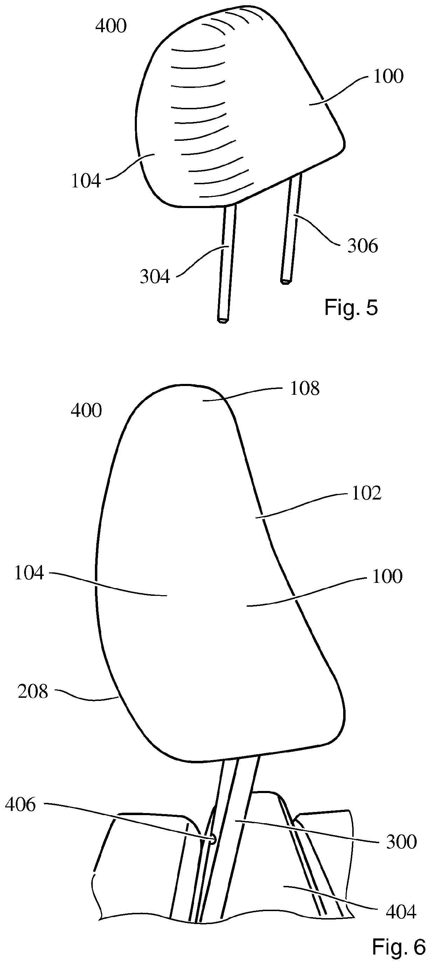

**Figur 3** zeigt eine U-förmig gebogene Stützstange 300, welche zwei Schenkel 304 und 306 sowie eine dazwischen liegende kurze Streckenstange 302 aufweist. An den Schenkeln 304 und 306 sowie an der kurzen Streckenstange 302 sind zweite Einstanzungen 406 angebracht (in Figur 6 dargestellt), welche dazu ausgebildet sind, die Haken 106 des Rückteils 100 aufzunehmen, um so eine feste Verbindung zwischen dem Rückteil und der U-förmig gebogenen Stützstange 300 herzustellen.

**Figur 4** zeigt die erfindungsgemäße Kopfstütze 400 nach einer Zusammenmontage des Vorderteils 200 und des Rückteils 100 sowie der U-förmig gebogene Stützstange 300. Das Vorderteil 200 und das Rückteil 100 sind formschlüssig miteinander bzw. ineinander an den Rändern verkantet, wobei die Seiten 104 der Kopfstütze 400 von dem Rückteil 100 gebildet werden. Die Schenkel 304 und 306 der U-förmig gebogenen Stützstange 300 ragen aus dem von dem Vorderteil 200 und dem Rückteil 100 gebildeten Raum heraus.

In **Figur 5** ist die erfindungsgemäße Kopfstütze 400 mit Blick auf das Rückteil 100 im zusammenmontierten Zustand dargestellt. Das Rückteil 100 bildet eine Hartschale im hinteren Bereich der Kopfstütze 400, welche sowohl die Rückseite 100 als auch die Seiten 104 der Kopfstütze 400 umfasst.

**Figur 6** zeigt eine originäre Spritzgussform des Rückteils 100 von der Seite, wobei das Rückteil 100 auf der U-förmig gebogenen Stützstange 300 aufmontiert ist. Die U-förmig gebogene Stützstange 300 ist auf die Rückenlehne 404 eines Fahrzeugsitzes montiert. An der U-förmig gebogenen Stützstange 300 sind zweite Einstanzungen 406 angebracht.

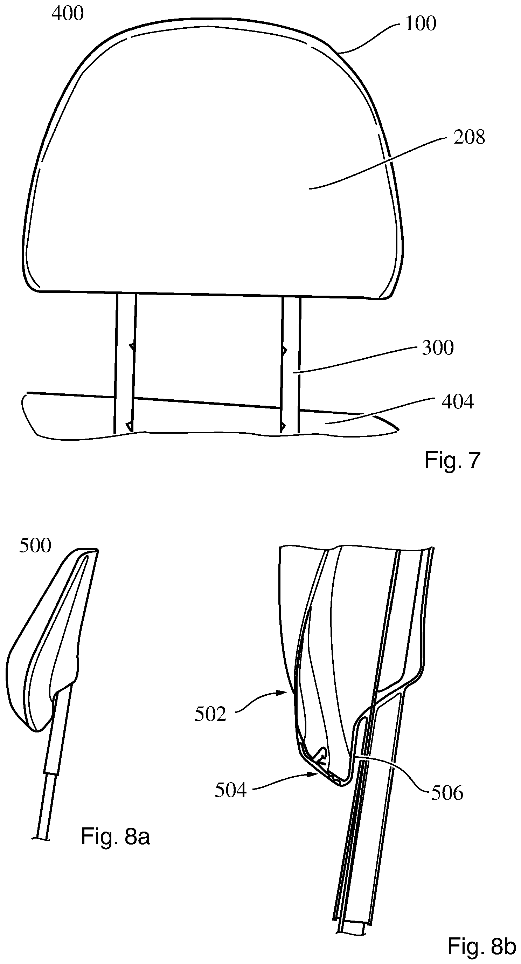

**Figur 7** zeigt die erfindungsgemäße zusammenmontierte und auf die Rückenlehne 404 eines Fahrzeugsitzes aufmontierte Kopfstütze 400 mit Aufsicht auf die Frontseite 208 des Vorderteils 200. Dabei wird die Frontseite 208 des Vorderteils 200 von einem zugeschnittenen Bezug gebildet.

Fig. 8a zeigt eine seitliche Außenansicht einer weiteren Ausführungsform der erfindungsgemäßen Kopfstütze. In der in Fig. 8 gezeigten Ausführungsform weisen das Vorderteil 200 und das Rückteil 100, und insbesondere der Boden der Kopfstütze eine im Vergleich zu den in den vorhergehenden Figuren abgewandelte Ausprägungsform auf. Ebenso weist die Stützstange 300 eine in Relation zum Vorderteil 200 und dem Rückteil 100 andersgeartete relative Positionierung auf, wobei die Stützstange 300 stärker dorsal gelagert angeordnet ist und im Wesentlichen in unmittelbarer Nähe zum Rückteil 100 parallel verläuft.

Fig. 8b zeigt eine vergrößerte seitliche Außen- und Innenansicht besagter Ausführungsform der erfindungsgemäßen Kopfstütze. In dem von dem Vorderteil 200 und dem Rückteil 100 gebildeten Innenraum ist ein Schaumstoff (Rigid Foam), z.B. Polyurethan, eingefüllt, welcher die im Stand der Technik bekannten Inserts aus expandiertem Polypropylen oder Kunststoff ersetzt. Dadurch kann unter Anwendung einer Pour-in-Place Technologie oder unter Anwendung beispielsweise einer analogen Through Hole Reflow Technology (Pin in Paste) die Stützstange 300 in dem Schaumstoff des Innenraums fixiert werden. Außerdem kann eine sonst übliche Polsterung durch ein zweiteiliges Kunststoffteil, bestehend aus einem Zuschnitthalterrahmen 504 und einer Hinterabdeckung 506, ersetzt werden, wobei der Zuschnitthalterrahmen 504 dem Vorderteil 200 und die Hinterabdeckung 506 dem Rückteil 100 entsprechen.

Das Vorderteil 200 umfasst einen zugeschnittenen Bezug 502. Der zugeschnittene Bezug 502 ist lediglich mittels der Haken 106 an dem Vorderteil 200 befestigt, ohne dass Nähte erforderlich sind. Die Haken 106 sind aus dem Vorderteil 200 ausgeformt und können zapfenartig ausgeprägt sein. Das Vorderteil 200 und/oder die integrierten Haken 106 können einteilig aus einem thermoplastischen Material geformt sein. Auch das Rückteil 100 kann aus einem Kunststoff gefertigt sein. Die Haptik und der Komfort der Kopfstütze können durch eine im Zuschnitt des Bezugs mit dem thermoplastischen Vorderteil 200 integrierte Laminierung optimiert werden. Dadurch wird ein Selfskinning vermieden. Das Gewicht und das Volumen der Kopfstütze können reduziert werden, ohne dass Komfort und Sicherheit einbüßen müssen. Durch Benutzung eines auf den Bezug des übrigen Sitzes abgestimmten Bezugs für das Vorderteil 200 und beispielsweise eine genarbte Oberfläche des Rückteils 100 können auch ästhetische Anforderungen erfüllt werden.

### Bezugszeichenliste

- 100: Rückteil
- 102: Rückseite des Rückteils
- 104: integrierte Seitenteile
- 106: Haken
- 108: Oberkante des Rückteils
- 110: Ränder des Rückteils
- 200: Vorderteil
- 202: Boden des Vorderteils
- 204: erste Einstanzungen
- 206: Oberkante des Vorderteils
- 208: Frontseite des Vorderteils
- 210: Ränder des Vorderteils
- 300: U-förmig gebogene Stützstange
- 302: kurze Stangenstrecke
- 304, 306: Schenkel der Stange
- 400: Kopfstütze
- 404: Rückenlehne
- 406: zweite Einstanzungen
- 500: Kopfstütze mit Schaumstoff befüllten Innenbereich und Bezug ohne Nähte auf der Frontseite
- 502: Bezug
- 504: Zuschnitthalterrahmen
- 506: hintere Abdeckung

## Patentansprüche

1. Kopfstütze (400) für ein Fahrzeug, wobei die Kopfstütze (400) ein Vorderteil (200) und ein Rückteil (100) mit integrierten Seitenteilen (104) umfasst, wobei das Vorderteil (200) und das Rückteil (100) mit integrierten Seitenteilen (104) derart komplementierend geformt sind, dass sie nach einer Zusammenmontage zusammen einen geschlossenen Raum bilden, in welchen eine U-förmig gebogene Stützstange (300) aufnehmbar ist, **dadurch gekennzeichnet, dass** das Rückteil (100) mit den integrierten Seitenteilen (104) seitlich nach innen geneigte Ränder (110) aufweist, auf welche Haken (106) angebracht sind, welche dazu ausgebildet sind, mit an den seitlichen Rändern (210) des Vorderteils (200) angebrachten ersten Einstanzungen (204) eine erste steckartige Verbindung einzugehen, wobei die nach innen geneigten Ränder (110) des Rückteils (100) mit den integrierten Seitenteilen (104) die seitlichen Ränder (210) des Vorderteils (200) formschlüssig umschließen, wobei jeder der Haken (106) entlang seiner jeweiligen Achse eine sich verjüngende Spitze aufweist, welche dazu ausgebildet ist, von den ersten Einstanzungen aufgenommen zu werden, wobei das Vorderteil (200) ein zugeschnittenes Verkleidungsteil umfasst, welches einen Bezug umfasst.

2. Kopfstütze (400) nach Anspruch 1, **dadurch gekennzeichnet, dass** ein Teil der Haken (106) ferner dazu ausgebildet ist, mit zweiten Einstanzungen (406) in der U-förmig gebogenen Stützstange (300) eine zweite steckartige Verbindung einzugehen.

3. Kopfstütze (400) nach einem der vorhergehenden Ansprüche, **dadurch gekennzeichnet, dass** das Rückteil (100) mit den integrierten Seitenteilen (104) ein Spritzgussteil ist, wobei das Spritzgussteil einen Kunststoff umfasst.

4. Kopfstütze (400) nach einem der vorhergehenden Ansprüche, **dadurch gekennzeichnet, dass** das Vorderteil (200) und das Rückteil (100) mit den integrierten Seitenteilen (104) frei von Nähten sind.

5. Kopfstütze (400) nach einem der vorhergehenden Ansprüche, **dadurch gekennzeichnet, dass** in den geschlossenen Raum ein Schaumstoff einfüllbar ist, wobei der Schaumstoff ein Hartschaum und/oder ein Weichschaum ist.

6. Kopfstütze (400) nach einem der vorhergehenden Ansprüche, **dadurch gekennzeichnet, dass** die U-förmig gebogene Stützstange (300) derart in dem geschlossenen Raum zwischen dem Vorderteil (200) und dem Rückteil (100) mit den integrierten Seitenteilen (104) angeordnet ist, dass die kürzeste Stangenstrecke (302) der U-förmig gebogenen Stützstange (300) weitgehend parallel zur Oberkante (108) des Rückteils (100) mit den integrierten Seitenteilen (104) und zur Oberkante (206) des Vorderteils (200) verläuft.

7. Verfahren zur Herstellung einer Kopfstütze (400), wobei in einem Verfahrensschritt ein Vorderteil (200), ein Rückteil (100) mit integrierten Seitenteilen (104) und eine U-förmig gebogene Stützstange (300) zusammenmontiert werden, **dadurch gekennzeichnet, dass** das Rückteil (100) mit den integrierten Seitenteilen (104) seitlich nach innen geneigte Ränder (110) aufweist, auf welche Haken (106) angebracht sind, welche mit an den seitlichen Rändern (210) des Vorderteils (200) angebrachten ersten Einstanzungen (204) eine erste steckartige Verbindung eingehen, wobei die nach innen geneigten Ränder (110) des Rückteils (100) mit den integrierten Seitenteilen (104) die seitlichen Ränder (210) des Vorderteils (200) formschlüssig umschließen, wobei jeder der Haken (106) entlang seiner jeweiligen Achse eine sich verjüngende Spitze aufweist, welche von den ersten Einstanzungen aufgenommen werden, wobei das Vorderteil (200) ein zugeschnittenes Verkleidungsteil umfasst, welches einen Bezug umfasst.

8. Verfahren nach Anspruch 7, wobei im Rahmen eines Pour-in-Place Verfahrens das Vorderteil (200) und das Rückteil (100) mit den integrierten Seitenteilen (104) formschlüssig zusammengefügt werden, wobei ein geschlossener Raum entsteht, in welchen die U-förmig gebogene Stützstange (300) positioniert wird und an der Oberkante (108) des Rückteils (100) mittels eines Teils der Haken (106) befestigt wird, wobei in den geschlossenen Raum ein Schaumstoff eingespritzt wird, wobei das Rückteil (100) ein Spritzgussteil ist, welches einen Kunststoff umfasst, wobei für die Herstellung des Spritzgussteils und das Einspritzen des Schaumstoffs ein identischer Trichter verwendet wird.

## Claims

1. Head rest (400) for a vehicle, the head rest (400) comprising a front part (200) and a rear part (100) with integrated side parts (104), the front part (200) and the rear part (100) with integrated side parts (104) being formed in a complementary manner such that, after assembly, they together form a closed space, into which a supporting rod (300) which is curved in a U-shape can be received, **characterized in that** the rear part (100) with the integrated side parts (104) has laterally inwardly inclined edges (110), on which hooks (106) are attached which are configured for entering into a first plug-like connection with first punched portions (204) which are made on the lateral edges (210) of the front part (200), the inwardly inclined edges (110) of the rear part (100) with the integrated side parts (104) enclosing the lateral edges (210) of the front part (200) in a positively locking manner, along its respective axis, each of the hooks (106) having a tapering tip which is configured to be received by the first punched portions, the front part (200) comprising a tailored trim part which comprises a cover.

2. Head rest (400) according to Claim 1, **characterized in that** a part of the hooks (106) is configured, furthermore, to enter into a second plug-like connection with second punched portions (406) in the supporting rod (300) which is curved in a U-shape.

3. Head rest (400) according to one of the preceding claims, **characterized in that** the rear part (100) with the integrated side parts (104) is an injection molded part, the injection molded part comprising a plastic.

4. Head rest (400) according to one of the preceding claims, **characterized in that** the front part (200) and the rear part (100) with the integrated side parts (104) are free of seams.

5. Head rest (400) according to one of the preceding claims, **characterized in that** a foam can be filled into the closed space, the foam being a hard foam and/or a soft foam.

6. Head rest (400) according to one of the preceding claims, **characterized in that** the supporting rod (300) which is curved in a U-shape is arranged in the closed space between the front part (200) and the rear part (100) with the integrated side parts (104) in such a way that the shortest rod section (302) of the supporting rod (300) which is curved in a U-shape runs largely parallel to the upper edge (108) of the rear part (100) with the integrated side parts (104) and to the upper edge (206) of the front part (200).

7. Method for producing a head rest (400), a front part (200), a rear part (100) with integrated side parts (104), and a supporting rod (300) which is curved in a U-shape being assembled together in one method step, **characterized in that** the rear part (100) with the integrated side parts (104) has laterally inwardly inclined edges (110), on which hooks (106) are attached which enter into a first plug-like connection with first punched portions (204) which are made on the lateral edges (210) of the front part (200), the inwardly inclined edges (110) of the rear part (100) with the integrated side parts (104) enclosing the lateral edges (210) of the front part (200) in a positively locking manner, along its respective axis, each of the hooks (106) having a tapering tip which are received by the first punched portions, the front part (200) comprising a tailored trim part which comprises a cover.

8. Method according to Claim 7, the front part (200) and the rear part (100) with the integrated side parts (104) being joined together in a positively locking manner within the context of a pour-in-place process, a closed space being produced, in which the supporting rod (300) which is curved in a U-shape is positioned and is fastened to the upper edge (108) of the rear part (100) by means of a part of the hooks (106), a foam being injected into the closed space, the rear part (100) being an injection molded part which comprises a plastic, an identical funnel being used for the production of the injection molded part and the injection of the foam.

## Revendications

1. Appui-tête (400) destiné à un véhicule, l'appui-tête (400) comprenant une partie avant (200) et une partie arrière (100) pourvue de parties latérales intégrées (104), la partie avant (200) et la partie arrière (100) pourvue de parties latérales intégrées (104) étant formées de manière complémentaire de telle sorte qu'après assemblage, elles forment conjointement un espace fermé dans lequel une barre de support (300) pliée en U peut être reçue, **caractérisé en ce que** la partie arrière (100) pourvue des parties latérales intégrées (104) comporte des bords (110) inclinés latéralement vers l'intérieur sur lesquels sont fixés des crochets (106) qui sont conçus pour réaliser, avec des premiers ajourages (204) ménagés au niveau des bords latéraux (210) de la partie avant (200), une première liaison par enfichage, les bords (110), inclinés vers l'intérieur, de la partie arrière (100) pourvue des parties latérales intégrées (104) enfermant par complémentarité de formes les bords latéraux (210) de la partie avant (200), chacun des crochets (106) comportant le long de son axe respectif une pointe effilée qui est conçue pour être reçue par les premiers ajourages, la partie avant (200) comprenant une partie d'habillage découpé qui comprend une garniture.

2. Appui-tête (400) selon la revendication 1, **caractérisé en ce qu'**une partie des crochets (106) est en outre conçue pour réaliser avec des deuxièmes ajourages (406), ménagés dans la barre de support (300) pliée en U, une deuxième liaison par enfichage.

3. Appui-tête (400) selon l'une des revendications précédentes, **caractérisé en ce que** la partie arrière (100) pourvue des parties latérales intégrées (104) est une partie moulée par injection, la partie moulée par injection comprenant une matière synthétique.

4. Appui-tête (400) selon l'une des revendications précédentes, **caractérisé en ce que** la partie avant (200) et la partie arrière (100) pourvue des parties latérales intégrées (104) sont dépourvues de soudure.

5. Appui-tête (400) selon l'une des revendications précédentes, **caractérisé en ce que** l'espace fermé peut être rempli d'une matière alvéolaire, la matière alvéolaire étant une mousse dure et/ou une mousse souple.

6. Appuie-tête (400) selon l'une des revendications précédentes, **caractérisé en ce que** la barre de support (300) pliée en U est disposée dans l'espace fermé entre la partie avant (200) et la partie arrière (100) pourvue des parties latérales intégrées (104), **en ce que** la portion de barre la plus courte (302) de la barre de support (300) pliée en U s'étend en grande partie parallèlement au bord supérieur (108) de la partie arrière (100) pourvue des parties latérales intégrées (104) et au bord supérieur (206) de la partie avant (200).

7. Procédé de fabrication d'un appui-tête (400), une partie avant (200), une partie arrière (100) pourvue de parties latérales intégrées (104) et une barre de support (300) pliée en U étant assemblées ensemble en une seule étape de procédé, **caractérisé en ce que** la partie arrière (100) pourvue des parties latérales intégrées (104) comporte des bords (110) inclinés latéralement vers l'intérieur sur lesquels sont fixés des crochets (106) qui réalisent, avec des premiers ajourages (204) ménagés au niveau des bords latéraux (210) de la partie avant (200), une première liaison par enfichage, les bords (110), inclinés vers l'intérieur, de la partie arrière (100) pourvue des parties latérales intégrées (104) enfermant par complémentarité de formes les bords latéraux (210) de la partie avant (200), chacun des crochets (106) comportant le long de son axe respectif une pointe effilée qui est reçue par les premiers ajourages, la partie avant (200) comprenant une partie d'habillage découpée qui comprend une garniture.

8. Procédé selon la revendication 7, la partie avant (200) et la partie arrière (100) pourvue des parties latérales intégrées (104) étant assemblées par complémentarité de formes dans le cadre d'un procédé in situ, un espace fermé étant créé dans lequel la barre de support (300) pliée en U est positionnée et fixée au bord supérieur (108) de la partie arrière (100) à l'aide d'une partie des crochets (106), une matière alvéolaire étant injectée dans l'espace fermé, la partie arrière (100) étant une partie moulée par injection qui comprend une matière synthétique, un entonnoir identique étant utilisé pour la fabrication de la partie moulée par injection et l'injection de la matière alvéolaire.
